# EUROPÄISCHE PATENTANMELDUNG

(11) **EP 1 854 696 A1**
(43) Veröffentlichungstag der Anmeldung: **14.11.2007**
(21) Anmeldenummer: 07106827.4
(22) Anmeldetag: 24.04.2007
(51) Int. Cl.: B61D 17/20

(54) **Übergang mit einer Übergangsbrücke zwischen zwei miteinander gelenkig verbundenen Fahrzeugen**

(30) Priorität: 11.05.2006 AT 3832006 U
(71) Anmelder: Ultimate Transportation Equipment GmbH, 3300 Amstetten (AT)
(72) Erfinder: Teufl, Manfred, 3332, Rosenau (AT)
(74) Vertreter: KLIMENT & HENHAPEL

(57) **Zusammenfassung**

Übergang (14) zwischen zwei gelenkig miteinander gekuppelten Fahrzeugteilen (10,11), insbesondere eines Schienenfahrzeugs, wobei das erste Fahrzeugteil (10) eine erste Bodenplatte (1) aufweist und das zweite Fahrzeugteil (11) eine korrespondierende zweite Bodenplatte (2), welche im gekuppelten Zustand der Fahrzeugteile (10,11) in einem Abstand (7) voneinander distanziert sind und eine Trittplatte (3) vorgesehen ist, welche in einem ersten Endbereich (8) an der ersten Bodenplatte (1) und in einem zweiten Endbereich (9) an der zweiten Bodenplatte (2) aufliegt, wobei mindestens ein Versteifungselement (4) vorgesehen ist, welches an den beiden Bodenplatten (1,2) angelenkt ist und die Trittplatte (3) im Bereich des Abstandes (7) zwischen erster und zweiter Bodenplatte (1,2) am Versteifungselement (4) abstützbar ist. Um eine erhöhte Stabilität des Übergangs auch unter außergewöhnlicher und dynamischer Belastung zu gewährleisten, ist das Versteifungselement (4) in Form eines Stabes ausgebildet, welcher im Bereich seiner Endabschnitte in Ausnehmungen (12) oder Lagerbuchsen (20) der Trägerelemente (6) gehalten ist.

## Beschreibung

Die vorliegende Erfindung bezieht sich auf einen Übergang zwischen zwei gelenkig miteinander gekuppelten Fahrzeugteilen, insbesondere eines Schienenfahrzeugs, wobei das erste Fahrzeugteil eine erste Bodenplatte aufweist und das zweite Fahrzeugteil eine korrespondierende zweite Bodenplatte, welche im gekuppelten Zustand der Fahrzeugteile in einem Abstand voneinander distanziert sind und eine Trittplatte vorgesehen ist, welche in einem ersten Endbereich an der ersten Bodenplatte und in einem zweiten Endbereich an der zweiten Bodenplatte aufliegt und somit den Abstand überbrückt, gemäß dem Oberbegriff des Anspruchs 1.

Gattungsgemäße Übergange werden im allgemeinen Personen- und Güterverkehr eingesetzt, um Fahrgästen einen gefahrlosen Übertritt zwischen zwei in bekannter Weise miteinander gekuppelten Fahrzeugteilen zu ermöglichen.

Zu diesem Zweck weisen solche Übergänge eine Trittplatte auf, welche endseitig auf jeweils einer Bodenplatte eines Fahrzeugteils aufliegt. Die Trittplatte ist zumeist standardmäßig mit einer Aushebesicherung ausgestattet, welche ein Hochheben der Trittplatte zufolge von Relativbewegungen der Fahrzeugteile zueinander oder zufolge eines unbefugten, mutwilligen Zugriffs eines Fahrgasts verhindern soll.

Eine solche Aushebesicherung umfasst zumeist dreh- oder gleitbare Verriegelungselemente, mittels welcher die Trittplatte an den Bodenplatten arretierbar ist.

Als problematisch erweist sich bei bekannten Übergängen jedoch deren Instabilität unter Gewichtsbelastung. Insbesondere bei zunehmender Größe der Trittplatte bzw. des Abstandes, in welchem die Bodenplatten der beiden Fahrzeugteile voneinander distanziert sind, was zum Einsatz von mehrgliedrigen Trittplatten führt, deren einzelne Glieder in der Regel mit einer Scharniere verbunden sind, kann die Beanspruchung der Trittplatte zufolge der Gewichtseinwirkung eines oder mehrerer, auf der Trittplatte stehender bzw. gehender Fahrgäste, zu einer unerwünschten Durchbiegung der Trittplatte führen. Neben dem subjektiven Unsicherheitsgefühl für die Fahrgäste bedingt eine solche unerwünschte Durchbiegung aber auch eine unnötige Materialbeanspruchung, was bis zum Bruch der Trittplatte führen kann, was wiederum mit einer erheblichen Verletzungsgefahr für die Fahrgäste verbunden ist.

In der US 2 217 599 A ist daher die Vorsehung eines plattenförmigen Versteifungselementes vorgeschlagen, welches an beiden Bodenplatten eines gattungsgemäßen Übergangs angelenkt ist und wobei die Trittplatte im Bereich des Abstandes zwischen erster und zweiter Bodenplatte am Versteifungselement abgestützt ist. Zu diesem Zweck findet eine Federungsvorrichtung Einsatz, welche in einer Schienenprofilanordnung unterhalb der Trittplatte positioniert ist. Eine derartige Bauweise bedingt einen hohen Material- und Fertigungsaufwand. Eine flexible und schnelle Montage derartiger Versteifungselemente an miteinander zu kuppelnden Fahrzeugteilen ist nicht möglich.

Der vorliegenden Erfindung liegt die Aufgabe zugrunde, die genannten Nachteile zu vermeiden und einen Übergang der eingangs erwähnten Art zu schaffen, welcher trotz großem zu überbrückendem Abstand zwischen den Fahrzeugteilen eine hohe Stabilität auch unter starker und dynamischer Gewichtsbelastung aufweist. Ein solcher Übergang soll gleichzeitig dazu geeignet sein, sämtliche im Einsatzfalle des Fahrzeugs auftretenden Relativbewegungen der Fahrzeugteile zueinander auszugleichen. Insbesondere im Falle von Übergängen mit mehrgliedrigen Trittplatten soll eine wirksame Stabilisierung der Trittplatte ermöglicht werden.

Diese Aufgabe wird durch eine Vorrichtung mit den kennzeichnenden Merkmalen des Anspruchs 1 gelöst, indem das mindestens eine Versteifungselement eines gattungsgemäßen Übergangs in Form eines Stabes ausgebildet ist, welcher im Bereich seiner Endabschnitte in Ausnehmungen oder in Lagerbuchsen der Trägerelemente gehalten ist.

Selbst groß dimensionierte Trittplatten im Falle großer Abstände zwischen den Bodenplatten der beiden Fahrzeugteile, insbesondere auch mehrgliedrige Trittplatten können also hinsichtlich ihrer Festigkeit und Stabilität zuverlässig abgesichert werden.

Die erfindungsgemäßen Maßnahmen machen es möglich, die Trittplatten an Übergängen zwischen zwei Fahrzeugteilen materialökonomischer zu dimensionieren und trotz geringerer Profilstärke der Trittplatten eine erhöhte Stabilität zu gewährleisten.

Indem die Trittplatte nicht nur in ihren Endbereichen an jeweils einer Bodenplatte aufliegt, sondern zusätzlich noch zumindest einen Bereich innerhalb des im Wesentlichen horizontalen Abstandes zwischen den beiden Bodenplatten aufweist, in welchem die Trittplatte am stabförmigen Versteifungselement auflagert und somit in mittelbarer Weise eine zusätzliche Lagerung an den Bodenplatten erfährt, wird die Beanspruchung der Trittplatte in deren mittlerem Bereich wirksam reduziert und ein großer Stabilitätsgewinn des Übergangs erzielt. Auch unter ungewöhnlicher und dynamischer Belastung der Trittplatte wird ein ungewünschtes Durchbiegen der Trittplatte oder gar ein Materialbruch verhindert. Selbst schwergewichtige Fahrgäste oder mehrere, gleichzeitig die Trittplatte betretende Fahrgäste können den Übergang nunmehr sicher passieren, ohne aufgrund einer unerwünschten Durchbiegung derselben ein subjektives Unsicherheitsgefühl zu empfinden. Auch schwere Transportbehälter können auf einem erfindungsgemäßen Übergang bedenkenlos von einem Fahrzeugteil zum anderen geführt werden.

Neben einer möglichen Anordnung des mindestens einen stabförmigen Versteifungselementes seitlich der Trittplatte ist es in einer bevorzugten Ausführungsweise der Erfindung gemäß den kennzeichnenden Merkmalen des Anspruchs 2 vorgesehen, das Versteifungselement unterhalb der Trittplatte anzuordnen. Auf diese Weise kann ein direkter Kraftübertrag von der Trittplatte auf das Versteifungselement erfolgen, ohne dass das erfindungsgemäße Versteifungselement für einen Fahrgast ersichtlich ist.

Um einen definierten Kontakt zwischen dem Versteifungselement und der Trittplatte herzustellen, ist zufolge der kennzeichnenden Merkmale des Anspruchs 3 mindestens ein Auflagerelement vorgesehen, welches zwischen dem Versteifungselement und der Trittplatte angeordnet ist. Dieses kontaktiert in Gebrauchslage sowohl das Versteifungselement als auch die Trittplatte und kann verschiedentlich befestigt sein. So wird das Auflagerelement gemäß den kennzeichnenden Merkmalen des Anspruchs 4 an der Trittplatte angebracht, wobei das Auflagerelement vorzugsweise an der Unterseite der Trittplatte angeordnet ist und gemäß den kennzeichnenden Merkmalen des Anspruchs 5 in fertigungstechnisch vorteilhafter Weise als integraler Teil der Trittplatte ausgebildet sein kann.

Um sämtliche während des Fahrzeugbetriebs auftretenden Relativbewegungen der Fahrzeugteile zueinander in verschleißarmer Weise zu kompensieren, weist das Auflagerelement gemäß den kennzeichnenden Merkmalen des Anspruchs 6 eine Gleitfläche auf, welche das Versteifungselement in Gebrauchslage kontaktiert.

Anstelle einer Anordnung des Auflagerelementes an der Trittplatte ist es in einer weiteren bevorzugten Ausführungsform gemäß den kennzeichnenden Merkmalen des Anspruchs 7 ebenso möglich, das Auflagerelement am Versteifungselement anzuordnen oder als integralen Teil des Versteifungselementes auszubilden, welches bzw. welcher die Trittplatte kontaktiert.

Gemäß den kennzeichnenden Merkmalen des Anspruchs 8 ist das Versteifungselement mittels an den Bodenplatten angeordneter, vorzugsweise beweglich gelagerter Trägerelemente gehalten, wobei zufolge der kennzeichnenden Merkmale des Anspruchs 9 eine bewegliche Lagerung des Versteifungselementes an den Trägerelementen vorgesehen ist. Solcherart wird eine flexible Halterung für das Versteifungselement bereitgestellt, um Relativbewegungen der Fahrzeugteile zueinander problemlos zu kompensieren.

Eine weitere bevorzugte Ausführungsform beschreibt Anspruch 10, wonach die Trittplatte mehrgliedrig ausgeführt ist und im Falle einer dreigliedrigen Ausführung im mittleren der drei Glieder am Versteifungselement abgestützt ist. Eine zwecks besserer Handhabung bzw. Montage mehrgliedrig ausgeführte Trittplatte kann somit im Bereich ihrer Schwächung zufolge der Bauteiluntergliederung wirksam abgestützt werden.

Die Erfindung wird nun anhand eines Ausführungsbeispiels näher erläutert. Dabei zeigt:
- Fig.1: einen erfindungsgemäßen Übergang in Schrägansicht
- Fig.2: eine erfindungsgemäße Trittplatte in Unteransicht
- Fig.3: einen erfindungsgemäßen Übergang in Oberansicht
- Fig.4: einen erfindungsgemäßen Übergang gemäß Schnittführung A-A aus Fig.1
- Fig.5: einen erfindungsgemäßen Übergang gemäß Schnittführung B-B aus Fig.1
- Fig.6: eine erfindungsgemäße zweite Befestigungsvorrichtung in Schrägansicht
- Fig.7: eine erfindungsgemäße erste Befestigungsvorrichtung in Schrägansicht

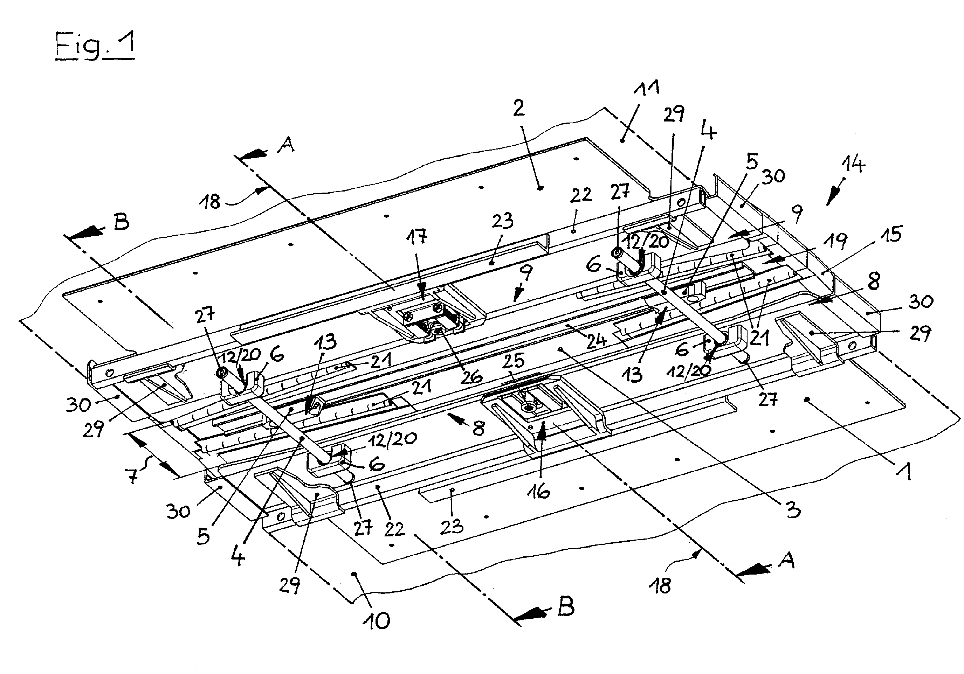

In Fig.1 sind zwei (lediglich angedeutet dargestellte) Fahrzeugteile 10,11 samt Rahmenelementen 22,23 ersichtlich, welchen jeweils eine Bodenplatte 1,2 zugeordnet ist. Nicht dargestellt ist ein Kupplungsmechanismus, welcher die beiden Fahrzeugteile 10,11 in bekannter Weise verbindet und ein wahlweise An- und Abhängen von Fahrzeugteilen aneinander bzw. an einen beliebig viele Fahrzeugteile antreibenden Triebwagen ermöglicht.

Die dargestellte Anordnung ist üblicherweise von einem (ebenfalls nicht abgebildeten) Faltenbalg umgeben, welcher den Übergang 14 samt einem darüber befindlichen, etwa mannshohen Raum für den Fahrgast ummantelt und insofern einen schlauchförmigen Durchgang ausbildet, welcher den Fahrgast vor Außeneinflüssen wie Wind oder Regen schützt.

Zwischen einer ersten Bodenplatte 1, welche an einem ersten Fahrzeugteil 10 befestigt ist und einer zweiten Bodenplatte 2, welche an einem zweiten Fahrzeugteil 11 befestigt ist, ist in horizontaler Richtung, also in Richtung der Fahrzeug-Längsachse 18, ein Abstand 7 ausgebildet, welcher mittels einem erfindungsgemäßen Übergang 14 überbrückt wird. Die Größe dieses Abstandes 7 richtet sich ganz nach der konstruktiven Ausgestaltung des Übergangs 14 und der Bodenplatten 1,2, der Art des Kupplungsmechanismus der Fahrzeugteile 10,11 sowie dem maximalen Schwenkwinkel der Fahrzeugteile 10,11 und damit auch der Bodenplatten 1,2 zueinander während einer Kurvenfahrt des Fahrzeugs.

Es sei angemerkt, dass der gegenständliche Abstand 7 nicht nur so wie in Fig.1 eingezeichnet, in einer horizontalen Ebene liegen kann, sondern auch einen von der Horizontalen abweichenden, schrägen Verlauf besitzen kann, falls eine Überbrückung von einer auf höherem Niveau befindlichen Bodenplatte 1 zu einer auf relativ dazu niedrigerem Niveau befindlichen Bodenplatte 2 vorgenommen wird.

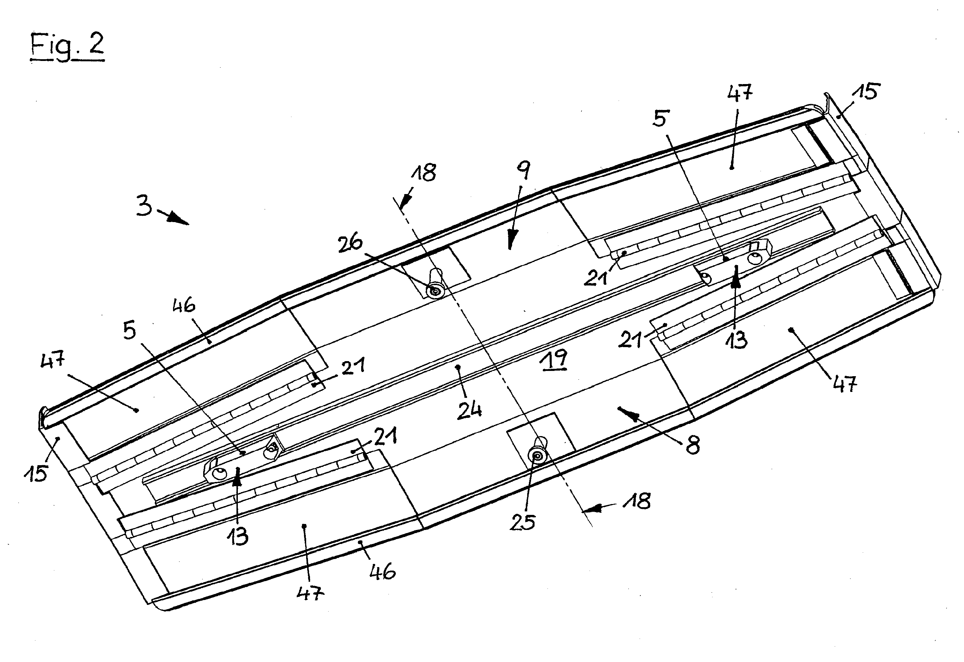

Der Übergang 14 weist eine Trittplatte 3 auf, welche in einem ersten Endbereich 8 an der ersten Bodenplatte 1 und in einem zweiten Endbereich 9 an der zweiten Bodenplatte 2 aufliegt und jeweils mittels Einhängeelementen 25,26 in Befestigungsvorrichtungen 16,17 an den Bodenplatten 1,2 angelenkt ist (siehe auch Fig.2, welche eine Einzeldarstellung der Trittplatte 3 zeigt). Vorzugsweise ist eine der Befestigungsvorrichtungen 16,17 als Festlager und die andere als Loslager ausgebildet, sodass also auf Seiten des Loslagers nicht nur ein Verschwenken, sondern auch eine Längsbewegung der Trittplatte 3 in Richtung der Fahrzeug-Längsachse 18 zugelassen wird. Relativbewegungen der Fahrzeugteile 10,11 zueinander, welche im Rahmen des Kupplungsmechanismus zugelassen werden, können auf diese Weise kompensiert werden.

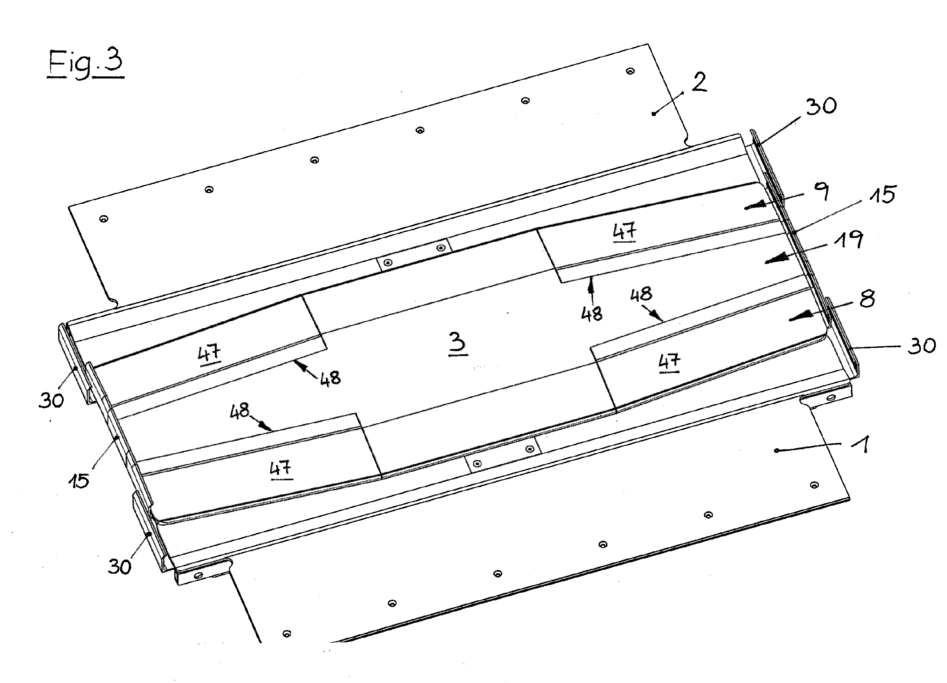

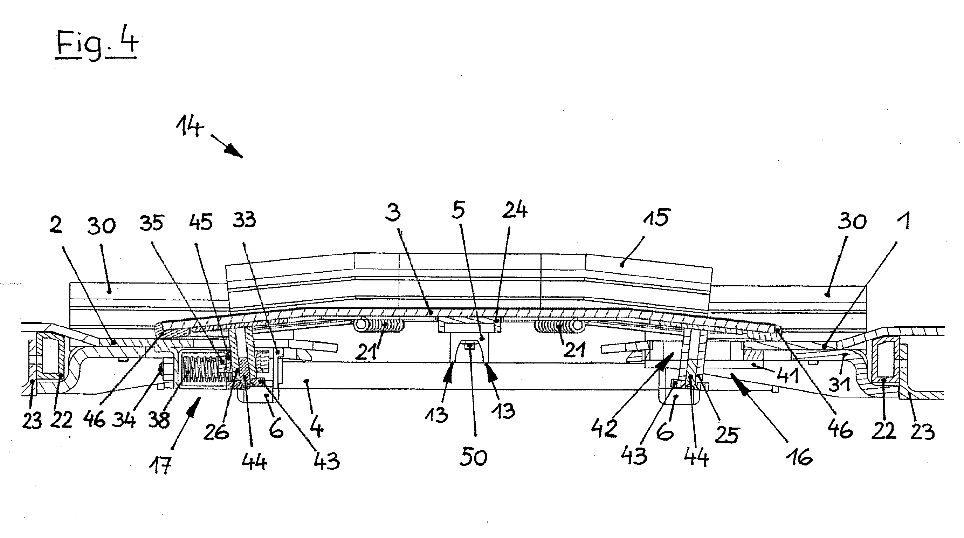

Seitlich der Trittplatte 3 ist jeweils ein zum Faltenbalg weisendes Übergangs-Abdeckprofil 15 angeordnet, welches in Betriebsposition von an den Bodenplatten 1,2 angeordneten Anschluss-Abdeckprofilen 30 überlappt wird, um ein unbefugtes Manipulieren an der im Folgenden beschriebenen erfindungsgemäßen Anordnung an der Unterseite der Trittplatte 3 zu verhindern (siehe auch Fig.3 und Fig.4).

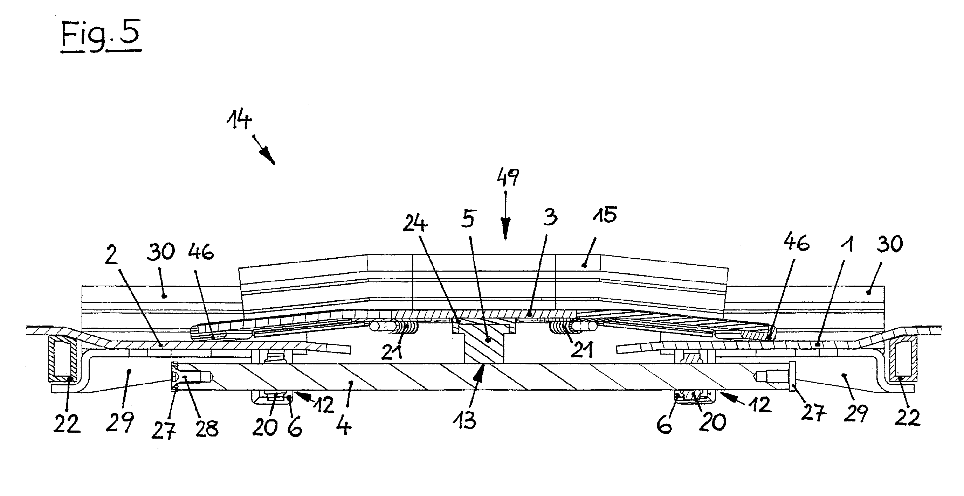

Erfindungsgemäß sind an der Unterseite der Bodenplatten 1,2, also an jener in Betriebsposition dem Boden zuweisenden Seite, jeweils Trägerelemente 6 angeordnet, die mit Ausnehmungen 12 samt Lagerbuchsen 20 versehen sind, welche ein in Form eines Stabes ausgeführtes Versteifungselement 4 aufnehmen (siehe auch Fig.5, welche eine Schnittdarstellung gemäß Linie B-B aus Fig.1 zeigt). Auf diesem, in den Lagerbuchsen 20 dreh- und verschiebbar gehaltenen Versteifungselement 4 lagert nun die Trittplatte 3 mittels eines an der Trittplatte 3 befestigten Auflagerelementes 5 auf, womit die Trittplatte 3 in ihrem mittleren Bereich 19, welcher gleichzeitig den hinsichtlich einer Biegebeanspruchung zufolge einer Gewichtseinwirkung am meisten belasteten Abschnitt der Trittplatte 3 darstellt, innerhalb des Abstands 7 abgestützt ist.

Wie in Fig.1 ersichtlich, weist das stabförmige Versteifungselement 4 an seinen beiden Endbereichen einen verdickten Bauteilabschnitt auf. Da der Durchmesser des Versteifungselementes 4 in den Endbereichen somit größer ist als in jenem Bereich, welcher von den Trägerelementen 6 bzw. den Lagerbuchsen 20 gehalten ist, wird das Versteifungselement 4 in seiner ihm zugeordneten Position gehalten und ein Hinausgleiten des Versteifungselementes 4 aus den Trägerelementen 6 während eines vibrationsintensiven Fahrzeugbetriebs verhindert. Der verdickte Bauteilabschnitt kann entweder einheitlich mit dem Versteifungselement 4 gefertigt sein oder aber gemäß Fig.5 als separates Befestigungselement 27 am Versteifungselement 4 befestigt, beispielsweise mittels Schrauben 28 angeschraubt sein.

Im vorliegenden Ausführungsbeispiel ist die Trittplatte 3 zwecks besserer Handhabung und aufgrund der Länge des zu überbrückenden Abstands 7 während ihrer Montage mehrgliedrig ausgeführt und weist in ihren Eckbereichen vier verschwenkbare Flügelelemente 47 auf. Die mit ihren Endkanten 48 im Wesentlichen normal zur Fahrzeug-Längsachse 18 verlaufenden Trittplatten-Glieder sind mittels Scharnierelementen 21 miteinander verbunden. Eine solche mehrgliedrige Bauart der Trittplatte 3 ermöglicht zwar einen flexibleren Einsatz der Trittplatte 3 bzw. ein vereinfachtes Anbringen und Abnehmen ebendieser an den Bodenplatten 1,2 sowie eine platzsparende Lagerung nicht im Einsatz befindlicher Trittplatten 3, bedingt jedoch eine Schwächung der Stabilität der Trittplatte 3 im Bereich jener aneinanderstoßenden Endkanten 48 der Trittplatten-Glieder (siehe auch Oberansicht gemäß Fig.3).

Aus diesem Grunde bedarf der zwischen erstem Endbereich 8 und zweitem Endbereich 9 liegende mittlere Bereich 19 der Trittplatte 3 einer Abstützung am Versteifungselement 4.

Das Auflagerelement 5 ist an seiner dem Versteifungselement 4 zugewandten Seite mit einer Gleitfläche 13 versehen, sodass sich zwischen Versteifungselement 4 und Auflagerelement 5 eine Linienberührung ergibt, welche sich im Zuge von Relativbewegungen der Bauteile zueinander als verschleißarm erweist und ein optimales Gleiten von Auflagerelement 5 und Versteifungselement 4 aneinander ermöglicht (siehe Fig.5).

Um eine Relativbewegung der Fahrzeugteile 10,11 zueinander bzw. ein Verschwenken eines der Fahrzeugteile 10,11 in einer Horizontalebene relativ zur Fahrzeug-Längsachse 18 des jeweils anderen Fahrzeugteiles 10,11 flexibel mitvollziehen zu können, ist das Versteifungselement 4 an den Bodenplatten 1,2 beweglich gelagert. Im vorliegenden Ausführungsbeispiel sind deshalb in die Ausnehmungen 12 der Trägerelemente 6 Lagerbuchsen 20 eingesetzt, welche eine lineare Bewegung des Versteifungselementes 4 entlang seiner Längsachse bei gleichzeitiger Drehbeweglichkeit des Versteifungselementes 4 zulassen. Es ist ebenso möglich, Lagerbuchsen 20 oder eine andere Lagerungsvorrichtung einzusetzen, welche darüber hinaus ein Verschwenken der Versteifungselemente 4 relativ zur Fahrzeug-Längsachse 18 zulassen. Die Trägerelemente 6 sind hierbei starr an der Unterseite der Bodenplatten 1,2 befestigt, beispielsweise durch Schweißung oder Verschraubung.

Es ist jedoch ebenso denkbar, die Trägerelemente 6 an den Bodenplatten 1,2 beweglich anzulenken, sodass in solchem Falle die Versteifungselemente 4 unmittelbar in den Ausnehmungen 12, beispielsweise mittels einer Spielpassungs-Bohrung aufgenommen werden und sich die Trägerelemente 6 einhergehend mit einer Relativbewegung der Fahrzeugteile 10,11 relativ zur Fahrzeug-Längsachse 18 verdrehen.

Das Auflagerelement 5 bzw. deren Gleitfläche 13 kann das Versteifungselement 4 in der Gebrauchslage des Übergangs 14 entweder fortwährend kontaktieren oder auch nur unter einer aktuellen Gewichtsbelastung, welche gemäß Fig.5 aus einer von oben kommenden Richtung 49 auf die Trittplatte 3 ausgeübt wird, sodass also im unbelasteten Zustand der Trittplatte 3 ein minimales Spiel zwischen Auflagerelement 5 und Versteifungselement 4 ausgebildet ist.

Im Ausführungsbeispiel gemäß Fig.1 sind zwei Versteifungselemente 4 vorgesehen, welche beiderseits der Fahrzeug-Längsachse 18 angeordnet und jeweils von einem Paar Trägerelementen 6 gehalten sind. Es versteht sich, dass je nach zu erwartender Belastung der Trittplatte 3 gegebenenfalls auch andere Anordnungsvarianten möglich sind, beispielsweise eine zusätzliche Vorsehung eines oder mehrerer Versteifungselemente 4 samt Trägerelementen 6 an den Bodenplatten 1,2 im Bereich der Fahrzeug-Längsachse 18.

Ebenso sind beliebige Variationen zum vorgestellten Prinzip der Abstützung der Trittplatte 3 denkbar, so etwa eine Anordnung der Versteifungselemente 4 seitlich der Trittplatte 3 oder eine unterschiedliche geometrische Ausgestaltung von Versteifungselement 4, Auflagerelement 5 und Trägerelementen 6. Beispielsweise sind auch Versteifungselemente 4 in Fachwerksform oder viereckige bzw. polygonale Querschnitte des Versteifungselementes 4 denkbar, ebenso wie eine dazu korrespondierende Form des Auflagerelementes 5 bzw. der Gleitfläche 13. Das Auflagerelement 5 kann auch einteilig mit der Trittplatte 3 ausgeführt sein.

Schließlich ist es anstelle einer Anordnung des Auflagerelementes 5 an der Trittplatte 3 auch möglich, das Auflagerelement 5 am Versteifungselement 4 anzuordnen, beispielsweise anzuschrauben oder auch das Auflagerelement 5 als integralen Teil des Versteifungselementes 4 auszubilden, welcher in Richtung der Trittplatte 3 weist und diese in einem vorbestimmten, eventuell verstärkt bewehrten und zwecks Verminderung der Gleitreibung mit einer eigenen Oberflächenbearbeitung versehenen Abschnitt kontaktiert.

Vorzugsweise ist das Auflagerelement 5 mittels einer Schraubverbindung 50 an einer an der Trittplatte 3 angeordneten Profilleiste 24 befestigt (siehe Fig.4).

Die Bodenplatten 1,2 sind zwecks besserer Bewehrung mittels Stützelementen 29 an den Rahmenelementen 22 der Fahrzeugteile 10,11 befestigt (Fig.1 und Fig.5).

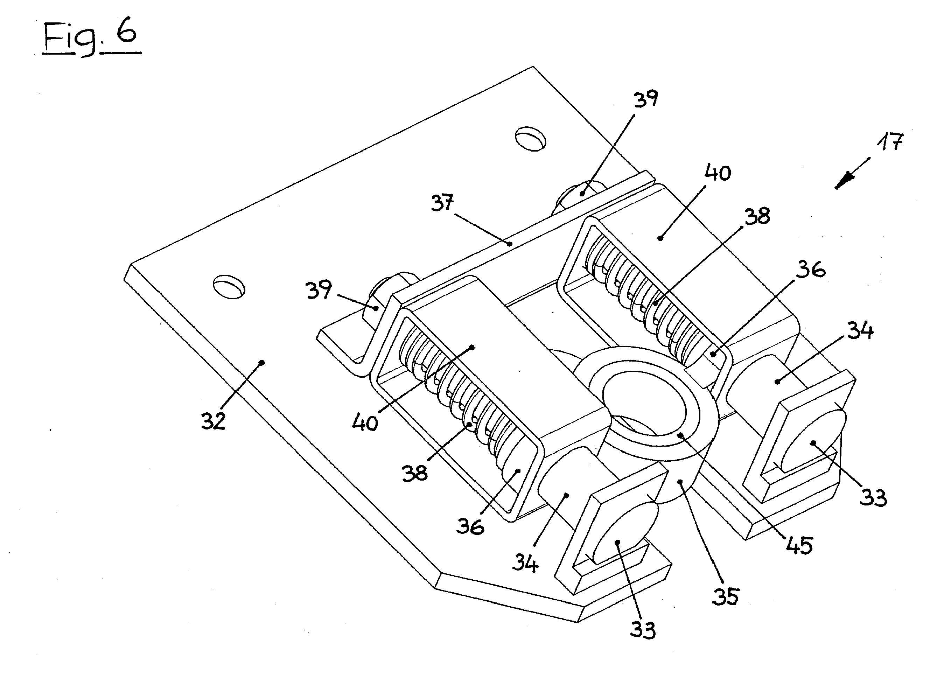

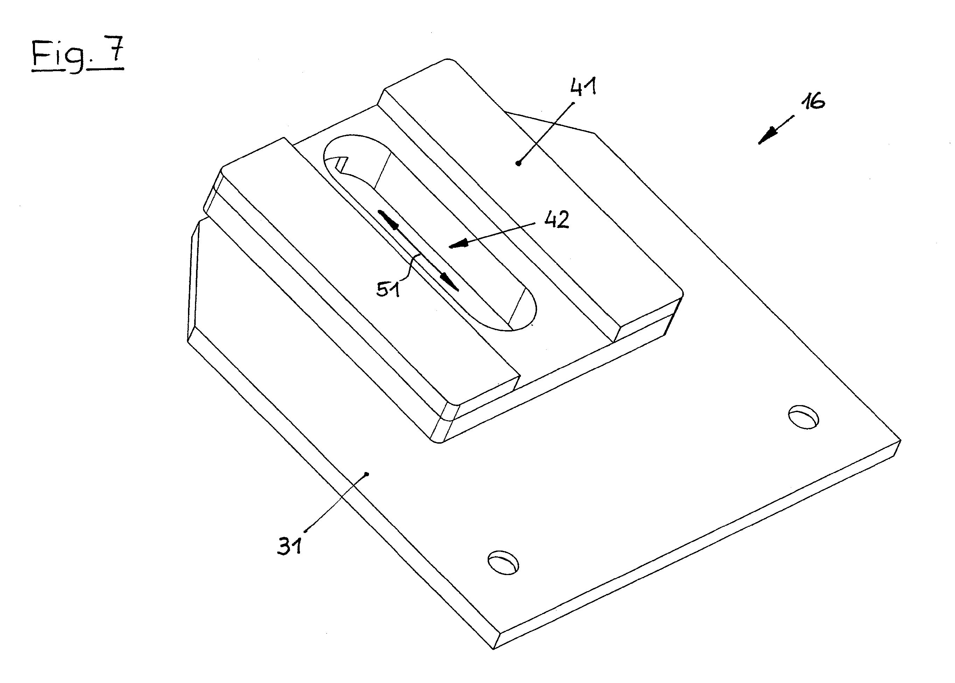

Die bereits erwähnten, an den Bodenplatten 1,2 angeordneten Befestigungsvorrichtungen 16,17 sind in den Figuren 6 und 7 näher dargestellt.

Hierbei zeigt Fig.7 eine erste Befestigungsvorrichtung 16, welche eine erste Grundplatte 31 und eine mit einer Führungsnut 42 versehene Führungsplatte 41 umfasst. Die erste Grundplatte 31 ist vorzugsweise an der ersten Bodenplatte 1 angeschweißt, kann an dieser jedoch auch auf andere Weise, beispielsweise mittels Verschraubung befestigt sein. Die Führungsnut 42 dient einer Aufnahme des in Fig.2 bzw. Fig.4 ersichtlichen ersten Einhängeelementes 25 der Trittplatte 3, welches an seiner zum Boden weisenden Stirnseite mit einem Abschlusselement 43 versehen ist. Das vorzugsweise scheibenförmig ausgeführte Abschlusselement 43 weist einen Durchmesser auf, welcher größer als die Breite der Führungsnut 42 ausgeführt ist, und verhindert solcherart ein Lösen des in Einsatz befindlichen ersten Einhängeelementes 25 aus der ersten Befestigungsvorrichtung 16. In Betriebsposition kann sich also das erste Einhängeelement 25 bei gleichzeitiger Drehbeweglichkeit entlang einer linearen Bewegungsrichtung 51 frei bewegen, um Relativbewegungen der Fahrzeugteile 10,11 zueinander zu kompensieren.

Demgegenüber zeigt Fig.6 eine Detaildarstellung der an der zweiten Bodenplatte 2 angeordneten zweiten Befestigungsvorrichtung 17. Diese umfasst eine zweite Grundplatte 32, welche vorzugsweise an der zweiten Bodenplatte 2 angeschweißt ist, an dieser jedoch auch beispielsweise mittels Verschraubung befestigt sein kann. An der Grundplatte sind in üblicher Verbindungstechnik zwei Lagerbockelemente 33 und ein Winkelprofil 37 angebracht. Die Lagerbockelemente 33 weisen jeweils einen vorzugsweise einstückig mit diesem gefertigten Lagerbolzen 34 auf, welcher sich bis zum Winkelprofil 37 erstreckt, dieses in (nicht ersichtlichen) Bohrungen im Winkelprofil 37 durchdringt und mittels einer Mutter 39 am Winkelprofil 37 befestigt ist.

Zwischen Winkelprofil 37 und Lagerbockelementen 33 ist jeweils ein klammerförmiges Halterungselement 40 angeordnet, welches sowohl an seinem dem Winkelprofil 37 zuweisenden Endabschnitt als auch an seinem dem Lagerbockelement 33 zuweisenden Endabschnitt mit Bohrungen versehen und mittels diesen am Lagerbolzen 34 (in Richtung der Fahrzeug-Längsachse 18) verschiebbar gelagert ist. Innerhalb des Halterungselementes 40 ist ein Federelement 38 gehalten, welches den Lagerbolzen 34 in eben jenem vom Halterungselement 40 umschlossenen Abschnitt umgibt und mit seiner dem Lagerbockelement 33 zuweisenden Stirnseite gegen eine ebenfalls innerhalb des Halterungselementes 40 angeordnete Hülsenführung 36 eines Hülsenelementes 35 drückt. Selbige Hülsenführung 36 ist beiderseits des Hülsenelementes 35 angeordnet und besitzt jeweils eine (in Fig.6 nicht sichtbare) Bohrung, in welcher die Hülsenführung 36 vom Lagerbolzen 34 durchdrungen und auf diesem geführt wird.

Das Hülsenelement 35, welches das zweite Einhängeelement 26 aufnimmt, ist auf diese Weise ebenfalls in Richtung der Fahrzeug-Längsachse 18 beweglich gelagert, allerdings nur entgegen einer vom Federelement 38 ausgeübten Vorspannung. Somit ist das zweite Einhängeelement 26 in der zweiten Befestigungsvorrichtung 17 sicher stabilisiert, erhält jedoch im Falle einer Relativbewegung der Fahrzeugteile 10,11 zueinander die Möglichkeit einer gepufferten Bewegung in Richtung der der Fahrzeug-Längsachse 18 (bei gleichzeitiger Drehbeweglichkeit).

Hierbei weist das zweite Einhängeelement 26 gleich dem ersten Einhängeelement 25 an seiner zum Boden weisenden Stirnseite ein scheibenförmiges Abschlusselement 43 auf, dessen Durchmesser größer ist als der Innendurchmesser des Hülsenelementes 35 bzw. einer innerhalb des Hülsenelementes 35 angeordneten Aufnahmebuchse 45 und verhindert somit ein unerwünschtes Lösen des in Einsatz befindlichen zweiten Einhängeelementes 26 aus der zweiten Befestigungsvorrichtung 17.

Die vorzugsweise ins Hülsenelement 35 eingepresste Aufnahmebuchse 45 besitzt eine konvexe Innenfläche (siehe Fig.4) und ermöglicht eine optimale Aufnahme vom zufolge einer geneigten Trittplattenkonstruktion schräg in das Hülsenelement 35 ragenden zweiten Einhängeelement 26.

Die Abschlusselemente 43 sind jeweils mittels einer Senkkopfschraube 44 am ersten und zweiten Einhängeelement 25,26 befestigt.

Wie in Fig.4 und Fig.5 ersichtlich, ist die Trittplatte 3 in ihren Endbereichen 8,9 mit Auflageleisten 46 versehen und lagert mittels diesen an den Bodenplatten 1,2 auf. Die vorzugsweise aus elastischem Werkstoff gefertigten Auflageleisten 46 stellen einen definierten Kontaktpunkt bzw. -bereich dar, in welchem die Trittplatte 3 an den Bodenplatten 1,2 aufliegt, ohne während des Fahrzeugeinsatzes unkontrolliert zu scheuern oder zu klappern.

Es versteht sich, dass der erfindungsgemäße Übergang nicht nur an Bodenplatten 1,2 im engeren Sinne eingesetzt werden kann, sondern auch an sämtlichen anderen auskragenden Anschlusselementen eines Fahrzeugteils, welche einer Auflage bzw. Befestigung von Trittplatten 3 dienen.

Die Anordnung des Auflagerelementes 5 an der Trittplatte 3 oder am Versteifungselement 4 wird bevorzugt in Form einer starren Befestigung vorgenommen, kann gegebenenfalls jedoch auch in mehr oder weniger beweglicher Weise, beispielsweise mittels Gelenk-, Feder- oder Kompressionselementen erfolgen, um auftretende Belastungen noch besser kompensieren zu können.

### Bezugszeichenliste:

- 1: erste Bodenplatte
- 2: zweite Bodenplatte
- 3: Trittplatte
- 4: Versteifungselement
- 5: Auflagerelement
- 6: Trägerelement
- 7: Abstand
- 8: erster Endbereich der Trittplatte
- 9: erster Endbereich der Trittplatte
- 10: erstes Fahrzeugteil
- 11: zweites Fahrzeugteil
- 12: Ausnehmungen
- 13: Gleitfläche
- 14: Übergang
- 15: Abdeckprofil
- 16: erste Befestigungsvorrichtung
- 17: zweite Befestigungsvorrichtung
- 18: Fahrzeug-Längsachse
- 19: mittlerer Bereich der Trittplatte
- 20: Lagerbuchsen
- 21: Scharnierelemente
- 22: Rahmenelement
- 23: Rahmenelement
- 24: Profilleiste
- 25: erstes Einhängeelement
- 26: zweites Einhängeelement
- 27: Befestigungselement
- 28: Schrauben
- 29: Stützelemente
- 30: Anschluss-Abdeckprofil
- 31: erste Grundplatte
- 32: zweite Grundplatte
- 33: Lagerbockelemente
- 34: Lagerbolzen
- 35: Hülsenelement
- 36: Hülsenführung
- 37: Winkelprofil
- 38: Federelemente
- 39: Muttern
- 40: Halterungselemente
- 41: Führungsplatte
- 42: Führungsnut
- 43: Abschlusselement
- 44: Senkkopfschrauben
- 45: Aufnahmebuchse
- 46: Auflageleiste
- 47: Flügelelemente
- 48: Endkanten der Trittplatten-Glieder
- 49: Gewichtswirkung
- 50: Schraubenverbindung
- 51: Bewegungsrichtung des ersten Einhängeelementes

## Patentansprüche

1. Übergang zwischen zwei gelenkig miteinander gekuppelten Fahrzeugteilen (10,11), insbesondere eines Schienenfahrzeugs, wobei das erste Fahrzeugteil (10) eine erste Bodenplatte (1) aufweist und das zweite Fahrzeugteil (11) eine korrespondierende zweite Bodenplatte (2), welche im gekuppelten Zustand der Fahrzeugteile (10,11) in einem Abstand (7) voneinander distanziert sind und eine Trittplatte (3) vorgesehen ist, welche in einem ersten Endbereich (8) an der ersten Bodenplatte (1) und in einem zweiten Endbereich (9) an der zweiten Bodenplatte (2) aufliegt und somit den Abstand (7) überbrückt, wobei mindestens ein Versteifungselement (4) vorgesehen ist, welches an den beiden Bodenplatten (1,2) angelenkt ist und die Trittplatte (3) im Bereich des Abstandes (7) zwischen erster und zweiter Bodenplatte (1,2) am Versteifungselement (4) abgestützt ist, **dadurch gekennzeichnet, dass** das Versteifungselement (4) in Form eines Stabes ausgebildet ist, welcher im Bereich seiner Endabschnitte in Ausnehmungen (12) oder Lagerbuchsen (20) der Trägerelemente (6) gehalten ist.

2. Übergang nach Anspruch 1, **dadurch gekennzeichnet, dass** das Versteifungselement (4) unterhalb der Trittplatte (3) angeordnet ist.

3. Übergang nach Anspruch 1 oder 2, **dadurch gekennzeichnet, dass** mindestens ein Auflagerelement (5) vorgesehen ist, welches zwischen dem Versteifungselement (4) und der Trittplatte (3) angeordnet ist und in Gebrauchslage sowohl das Versteifungselement (4) als auch die Trittplatte (3) kontaktiert.

4. Übergang nach Anspruch 3, **dadurch gekennzeichnet, dass** das Auflagerelement (5) an der Trittplatte (3), vorzugsweise an der Unterseite der Trittplatte (3) angebracht ist.

5. Übergang nach Anspruch 3 oder 4, **dadurch gekennzeichnet, dass** das Auflagerelement (5) als integraler Teil der Trittplatte (3) ausgebildet ist.

6. Übergang nach einem der Ansprüche 3 bis 5, **dadurch gekennzeichnet, dass** das Auflagerelement (5) eine Gleitfläche (13) aufweist, welche das Versteifungselement (4) in Gebrauchslage kontaktiert.

7. Übergang nach Anspruch 3, **dadurch gekennzeichnet, dass** das Auflagerelement (5) am Versteifungselement (4) angebracht oder als integraler Teil des Versteifungselementes (4) ausgebildet ist.

8. Übergang nach einem der Ansprüche 1 bis 7, **dadurch gekennzeichnet, dass** das Versteifungselement (4) mittels an den Bodenplatten (1,2) angeordneter, vorzugsweise beweglich gelagerter Trägerelemente (6) gehalten ist.

9. Übergang nach Anspruch 8, **dadurch gekennzeichnet, dass** das Versteifungselement (4) an den Trägerelementen (6) beweglich gelagert ist.

10. Übergang nach einem der Ansprüche 1 bis 9, **dadurch gekennzeichnet, dass** die Trittplatte (3) mehrgliedrig ausgeführt ist und im Falle dreigliedriger Ausführung vorzugsweise im mittleren der drei Glieder am Versteifungselement (4) abstützbar ist.
